# EUROPEAN PATENT SPECIFICATION

(11) **EP 0 384 376 B1**
(45) Date of publication and mention of the grant of the patent: **27.04.1994**
(21) Application number: 90103200.3
(22) Date of filing: 20.02.1990
(51) Int. Cl.: B62D 55/24

(54) **Elastic endless crawler**
Biegsame Endloslaufkette
Chenille élastique sans fin

(30) Priority: 23.02.1989 JP 20735/89 U
(43) Date of publication of application: 29.08.1990
(73) Proprietor: Bridgestone Corporation, Tokyo 104 (JP)
(72) Inventor: Togashi, Sumio, Chigasaki-shi, Kanagawa-ken (JP)
(74) Representative: Huss, Carl-Hans, Dipl.-Ing.

(56) References cited:
- EP-A- 0 300 488
- WO-A-87/06204
- US-A- 4 270 811

## Description

The invention relates to elastic endless tracks for use with motor vehicles such as earth-moving machines and the like.

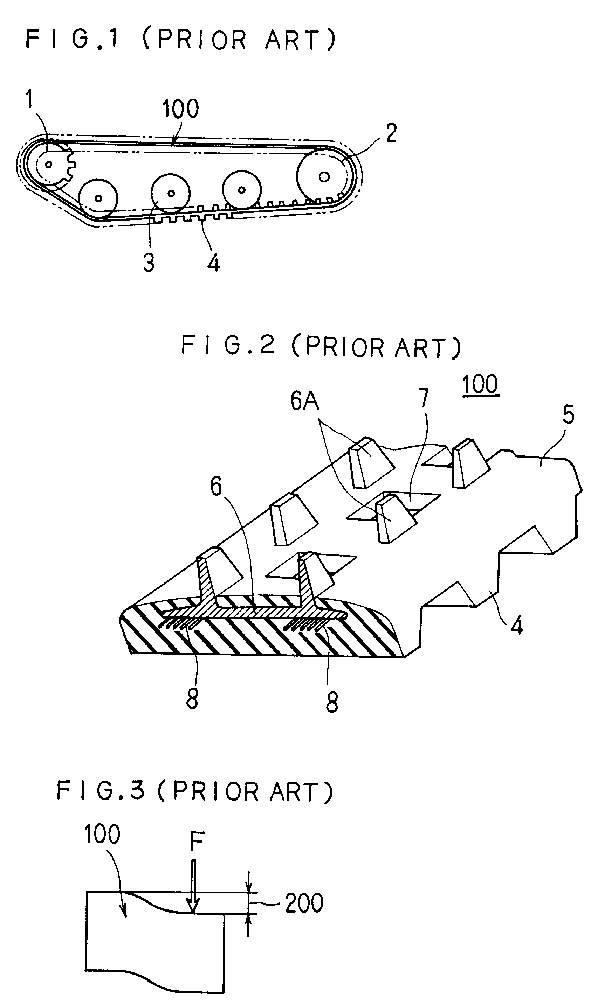

Motor vehicles such as conventional earth-moving vehicles may be so constructed, as shown in Fig. 1, that an elastic endless track 100 is held between a sprocket-wheel 1, an idler-wheel 2 on the opposite side of the sprocket-wheel and lower rollers 3 rolling on the inner surface of the elastic endless track 100. In addition, lugs 4 are provided on the outer surface of the track 100. Many cores 6 are embedded in this elastic endless track 100 at a right angle to the longitudinal direction of the track body 5 so that they are parallel to one another, as shown in Fig. 2, and engagement holes 7 are provided between the cores 6, with which the teeth of the sprocket-wheel 1 can engage. Also main cord layers 8 consisting of steel cords, etc. are embedded in the track body 5. Protrusions 6A of the cores 6 ought to prevent the lower rollers 3 from running off the track.

Under a condition that the motor vehicle travels obliquely on the slope or gets on a rugged part of the ground, or circles round the spot, the lower rollers tend to run off a track as shown in Figs. 1 and 2, because the elastic endless track clings to the ground producing a slip between the track and the vehicle thereby pushing the track toward the transverse direction. That occurs according to Fig. 3 when a force F acts on the elastic endless track 100 from the direction of its width so that it deviates from the center line of the motor vehicle.

The WO-A-87/06 204 discloses an endless rubber drive belt in which body cord ply layers are embedded, in such a manner that the plys of the first innermost layer lie in the longitudinal direction of the belt whereas the second and third layer are bias layers the plys of which are arranged angularly to the longitudinal direction of the track. Thereby the plys of the second layer lie in the opposite direction of the plys of the third layer and all layer extend over the whole width of the belt with the consequence of a poor flexibility when rolling about the sprocket and idler wheel.

It is an object of the present invention to provide an elastic endless track which prevents that the lower rollers of a vehicle to which the track is attached do not run off it to restrict an elongation of its body toward the longitudinal direction and at the same time, to prevent a slip of the track toward the direction of the width of the track body. A further object of the invention is to reduce the rigidity of the track body and to give soil or sand the possibility to escape from inside the track.

A preferred embodiment of the present invention is according to WO-A-87/06 204 consisting in an elastic endless track for use with motor vehicles such as earth-moving vehicles having lower rollers for rolling on the track, comprising a track body made of an elastic material, having a longitudinal and transverse direction and having an inner surface which is to work with said lower rollers and an outer surface which is to be in contact with the ground surface. In the track body are embedded main cord layers beneath said inner surface each of which comprises cords extending longitudinally of said track body to prevent elongation of said track body in said longitudinal direction, and a pair of bias cord layer sets embedded in said track body between said main cord layers and said outer surface, each of said bias cord layers sets consisting of a plurality of bias cord layers, each of which comprises bias cord arranged obliquely with respect to an imaginary straight line extended transversely of, and perpendicularly to, said track body. The invention differs from the prior art by the fact that the main cord layers are located at opposite lateral sides of the track body and as laterally spaced from the central portion of it, so that the central portion is free of said main cord layers, and that the bias cord layer sets are located at opposite sides and as laterally spaced from said central portion, so that the central portion is free of said bias cord layer sets; a plurality of cores is embedded in the track body between its inner surface and said main cord layers, the cores having protrusions which are to work with said lower rollers to prevent them from running off the track, said cores further being arranged in parallel to each other and perpendicularly to the length of the track body and a plurality of engagement holes is provided between the cores which are to be in mesh with the teeth of a drive tumbler sprocket-wheel of the motor vehicle.

The invention is explained in the following by way of example with reference to the drawings, which represent in
- Fig. 1: a side view showing an example of use of a general elastic endless track;
- Fig. 2: a partial sectional view in perspective of a conventional elastic endless track;
- Fig. 3: a view for explaining a drawback of a conventional elastic endless track;

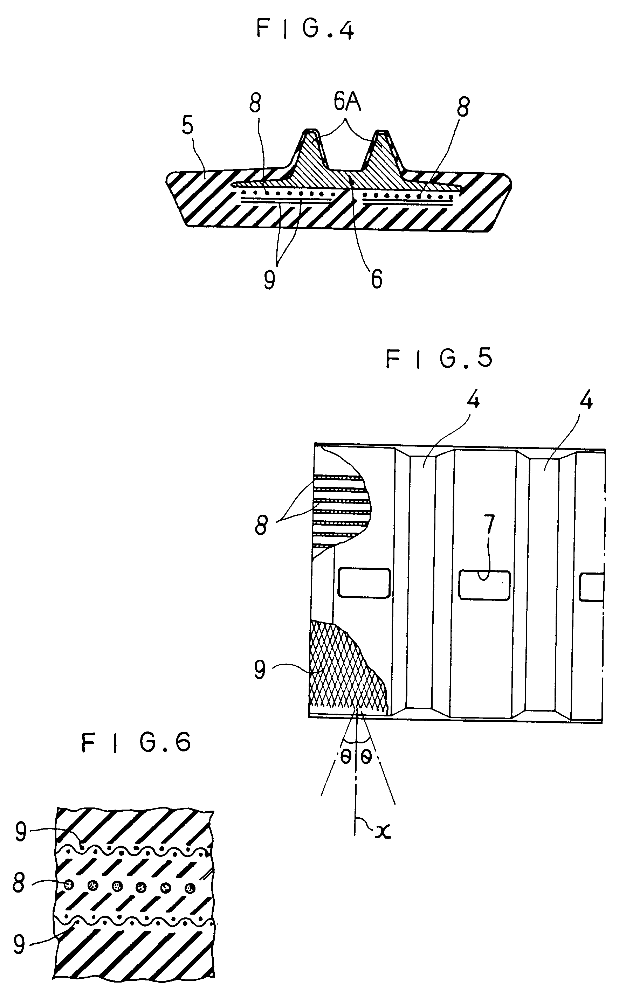

- Fig. 4: a sectional view showing a first embodiment of the present invention;
- Fig. 5: a partially cutaway plane view as seen from the side with which a track in contact with the ground;
- Fig. 6: a sectional view illustrating a second embodiment;

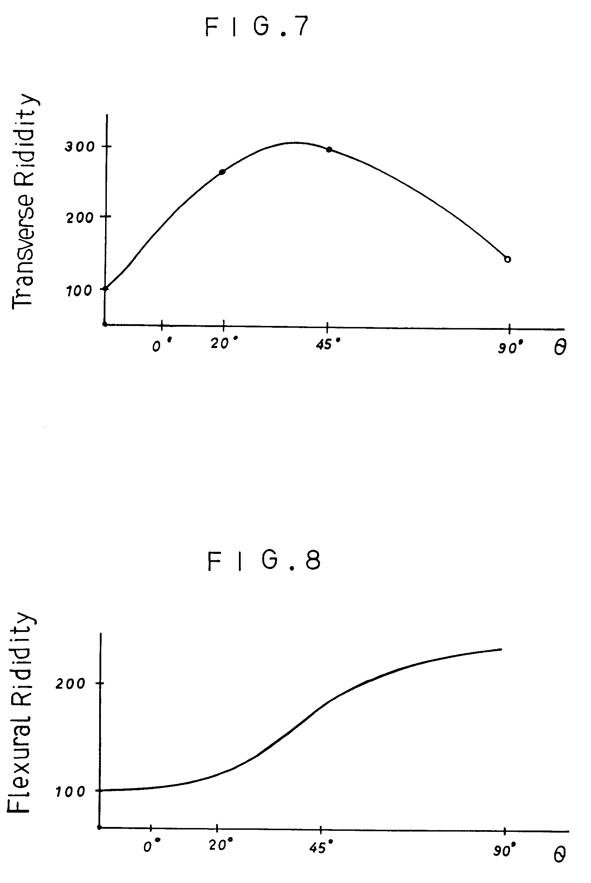

- Fig. 7: a graph indicating a relation between an angle of inclination of bias cords and a transverse rigidity;
- Fig. 8: a graph showing a relation between the angle of inclination of bias cords and a winding (flexural ) rigidity.

In case of a first embodiment of the present invention shown in Fig. 4 steel cords or the like are arranged in a track body 5 composed of elastic material such as endless beltlike rubber material along the longitudinal direction of the track body, and thereby main cord layers 8 restricting an elongation of the track body 5 toward the longitudinal direction are embedded. In addition, many cores 6 are embedded at a right angle to the longitudinal direction of the track body 5 so that they lie parallel to one another, and the main cord layers 8 are embedded under the lower part of the cores 6 with which the track body 5 comes in contact with the ground. Moreover under the lower part of the main cord layers 8 are two bias cord layers 9 in the track body one upon the other, which bias cords are so arranged that they incline reciprocally toward mutual opposite directions against a straight line in the width direction which intersects in the longitudinal direction of the track body 5 at right angles. Fig. 4 also shows that according to a further feature the main cord layers 8 and the bias cord layers 9 are located at opposite lateral sides in the track body 5 and as laterally spaced from its central portion, i.e. said central portion is free of main cord layers 8 and bias cord layers 9.

This feature allows easily to provide engagement holes 7 for meshing with the teeth of the sprocked-wheel 1. The holes 7 have further the effect, that the weight of the body 5 and its rigidity when wound on the sprocket can be reduced and that sand and so on can escape.

Fig. 5 is a partially cutaway plane view showing the side with which the elastic endless track comes in contact with the ground, and illustrates each one of the bias cord layers 9 and the main cord layers 8. It can be seen that track body 5 the bias cord layers 9 are so arranged that the cords incline reciprocally toward mutual opposite directions against a straight line x in the width direction which intersects in the longitudinal direction of the track body 5 at right angles. An angle of inclination ϑ of the cords is desirable within a range of 5° ≦ ϑ ≦ 45°, preferably within the range of 5° ≦ ϑ ≦ 35°.

As for the bias cord layers 9 and the cords composing the main cord layers 8, the use of steel cords, Kevlar (Trade Mark), textile cords, etc. are suitable.

In case of a second embodiment shown in Fig. 6 the bias cord layers 9 can be arranged on the upper and lower sides of each main cord layer 8.

The graph of Fig. 7 indicates a relation between the angle of inclination ϑ of the bias cords of the bias cords of the bias cord layers 9 and a transverse rigidity. The transverse rigidity becomes maximum at the point where the angle of inclination ϑ slightly exceeds 35°, and does not encrease further at any larger angles. Fig. 8 is a graph showing a relation between the angle of inclination ϑ and a flexural rigidity. It can be seen from the graph that the larger the angle of inclination ϑ becomes the more the flexural rigidity increases. In this case, the flexural rigidity is a rigidity which occurs when the elastic endless track moves on a sprocket-wheel 1 and an idler-wheel 2, and when the flexural rigidity is too strong, the mobility of the track on the sprocket 1, etc. becomes difficult. Accordingly, the smaller the flexural rigidity is the more the flexural rigidity suits the mobility of the track. Although it is desirable that the flexural rigidity is small and the transverse rigidity is large, it was ascertained that the angle of inclination ϑ must be, for this purpose, within the range of 5° ≦ ϑ ≦ 45°. Therefore, in case the bias cord layers 9 are embedded in the track body 5 within this range, even if under the condition that the motor vehicle travels obliquely on the slope or gets on a rugged part of the ground, when it circles round or the like the spot, if the elastic endless track has, to some extent, the transverse rigidity, it staves off a risk that it relatively deviates from the center line of the motor vehicle and that the lower rollers run off the track because the vehicle moves alone apart from the elastic endless track.

Besides, the bias cords inclining reciprocally toward mutual opposite directions may be either of woven ones and non-woven ones.

## Claims

1. An elastic endless track for use with motor vehicles such as earth-moving vehicles having lower rollers (3) for rolling on the track, said track comprising a track body (5) made of an elastic material, having a longitudinal and transverse direction and having an inner surface which is to work with said lower rollers (3) and an outer surface which is to be in contact with the ground surface; main cord layers (8) embedded in said track body (5) beneath said inner surface each of which comprises cords extending longitudinally of said track body to prevent elongation of said track body (5) in said longitudinal direction; and a pair of bias cord layer sets (9) embedded in said track body (5) between said main cord layers (8) and said outer surface, each of said bias cord layer sets (9) consisting of plurality of bias cord layers, each of which comprises bias cords arranged obliquely with respect to an imaginary straight line (X) extending transversely of, and perpendicularly to, said track body (5), and said track comprising an endless belt extending in said longitudinal direction,
characterized in that:
a) said main cord layers (8) are located at opposite lateral sides of said track body (5) and are laterally spaced from the central portion of said track body (5), so that said central portion is free of said main cord layers (8);
b) said bias cord layer sets (9) are located at opposite sides and are laterally spaced from said central portion, so that said central portion is free of said bias cord layer sets (9);
c) a plurality of cores (6) is embedded in said track body (5) between said inner surface and said main cord layers (8), said cores (6) having protrusions (6A) which are to work with said lower rollers (3) to prevent said lower rollers (3) from running off said track, said cores (6) further being arranged in parallel to each other and perpendicularly to the length of said track body (5);
and
d) a plurality of engagement holes (7) is provided between the cores (6) which are to be in mesh with the teeth of a sprocket (1) of the motor vehicle.

2. An elastic endless track according to claim 1, wherein said bias cords are arranged in obliquely with respect to said imaginary straight line (X) at an angle ϑ of 5° ≦ ϑ ≦ 45° and said cords in both said pair of main cord layers (8) and said pair of bias cord layers sets (9) are made of a steel.

3. An elastic endless track according to claim 1, wherein said elastic material is a rubber.

## Patentansprüche

1. Biegsame Endloslaufkette für Kraftfahrzeuge wie Erdbewegungsfahrzeuge, mit unteren Rollen (3) die auf der Laufkette rollen, wobei die Laufketten einen Laufkettenkörper (5) aus einem elastischen Material enthält, eine Längsrichtung und eine Querrichtung hat sowie eine Innenfläche, die mit den unteren Rollen 3 zusammenwirkt, und eine Außenfläche, die in Berührung mit der Bodenfläche steht, wobei Hauptstrangschichten (8) in den Laufkettenkörper (5) unter der Innenfläche eingebettet sind, die jeweils Stränge enthalten, die sich in Längsrichtung des Laufkettenkörpers erstrecken, um eine Verlängerung des Laufkettenkörpers (5) in der Längsrichtung zu verhindern, und wobei zwei Schrägstrangschichtsätze (9) in den Laufkettenkörper (5) zwischen den Hauptstrangschichten (8) und der Außenfläche eingebettet sind und jede der Schrägstrangschichtsätze (9) aus mehreren Schrägstrangschichten bestehen, von denen eine jede Schrägstränge enthält, die schräg zu einer imaginären geraden Linie (x) verlaufen, die sich quer und senkrecht zu dem Laufkettenkörper (5) erstreckt, wobei die Laufkette ferner ein Endlosband enthält, das sich in der Längsrichtung erstreckt,
**dadurch gekennzeichnet,** daß
a) die Hauptstrangschichten (8) an entgegengesetzten lateralen Seiten des Laufkettenkörpers (5) angeordnet sind, wobei sie seitlich von dem zentralen Abschnitt des Laufkettenkörpers (5) beabstandet sind, so daß der zentrale Abschnitt frei von den Hauptstrangschichten (8) ist,
b) die Schrägstrangschichtsätze (9) an gegenüberliegenden Seiten angeordnet und von dem zentralen Abschnitt seitlich beabstandet sind, so daß der zentrale Abschnitt frei von den Schrägstrangschichtsätzen (9) ist,
c) mehrere Kerne (6) in den Laufkettenkörper (5) zwischen der Innenfläche und den Hauptstrangschichten (8) eingebettet sind, wobei die Kerne (6) Vorsprünge (6A) haben, die mit den unteren Rollen (3) so zusammenwirken, daß die unteren Rollen (3) daran gehindert sind, von der Laufkette abzulaufen, wobei die Kerne (6) ferner parallel zueinander und senkrecht zur Länge des Laufkettenkörpers (5) angeordnet sind und
d) mehrere Eingriffslöcher (7) zwischen den Kernen (6) ausgebildet sind, die mit den Zähnen eines Kettenrades (1) des Kraftfahrzeugs kämmen.

2. Biegsame Endloslaufkette nach Anspruch 1, wobei die Schrägstränge schräg zu der imaginären geraden Linie (X) in einem Winkel ϑ von 5° ≦ ϑ ≦ 45° angeordnet sind und die Stränge beider Paare von Hauptstrangschichten (8) und der Paare von Schrägstrangschichtsätzen (9) aus Stahl bestehen.

3. Biegsame Endloslaufkette nach Anspruch 1, wobei das elastische Material Gummi ist.

## Revendications

1. Une chenille élastique sans fin utilisable avec des véhicules à moteur tels que des véhicules de terrassement présentant des galets inférieurs (3) pour rouler sur la chenille, ladite chenille comprenant un corps de chenille (5) réalisé en matière élastique, présentant une direction longitudinale et une direction transversale et ayant une surface interne qui doit travailler avec lesdits galets inférieurs (3) et une surface externe qui doit être en contact avec la surface du sol ; des couches principales (8) à cordons noyées dans ledit corps (5) de la chenille en dessous de ladite surface interne, chacune d'entre elles comprenant des cordons s'étendant longitudinalement audit corps de la chenille pour empêcher l'allongement dudit corps (5) de la chenille dans ladite direction longitudinale ; et une paire de jeux (9) de couches à cordons de sollicitation noyées dans ledit corps (5) de la chenille entre lesdites couches principales à cordons (8) et ladite surface externe, chacun des jeux (9) de couches à cordons de sollicitation comprenant un ensemble de couches à cordons de sollicitation, dont chacune comprend des cordons de sollicitation disposés obliquement par rapport à une ligne droite imaginaire (X) s'étendant transversalement et perpendiculairement audit corps (5) de la chenille, ladite chenille comprenant une bande sans fin s'étendant dans ladite direction longitudinale, caractérisée en ce que
(a) lesdites couches principales (8) à cordons sont situées au niveau des côtés latéraux opposés dudit corps (5) de la chenille et sont espacées latéralement de la partie centrale dudit corps (5) de la chenille, de sorte que ladite partie centrale ne comprend pas ladite couche principale (8) à cordons ;
(b) lesdits jeux (9) de couches à cordons de sollicitation sont placés à des côtés opposés et sont espacés latéralement de ladite partie centrale, de sorte que ladite partie centrale ne comprend pas lesdits jeux (9) de couches à cordons de sollicitation ;
(c) un ensemble d'âmes (6) est noyé dans ledit corps (5) de la chenille entre ladite surface interne et lesdites couches principales (8) à cordons, lesdites âmes (6) présentant des saillies (6A) devant travailler avec lesdits galets inférieurs (3) pour empêcher lesdits galets inférieurs (3) de sortir de ladite chenille lors du roulage, lesdites âmes (6) étant en outre montées parallèlement l'une à l'autre et de manière perpendiculaire à la longueur dudit corps (5) de la chenille ;
et
(d) un ensemble de trous d'engrènement (7) est prévu entre les âmes (6) qui doivent venir en prise avec les dents d'un barbotin (1) du véhicule à moteur.

2. Une chenille élastique sans fin selon 1a revendication 1, dans laquelle lesdits cordons de sollicitation sont montés obliquement par rapport à ladite ligne droite imaginaire (X) selon un angle ϑ de 5° ≦ ϑ ≦ 45°, lesdits cordons tant de ladite paire de couches principales (8) à cordons que de ladite paire de jeux (9) de couches à cordons de sollicitation étant réalisés en acier.

3. Une chenille élastique sans fin selon 1a revendication 1, dans laquelle la matière élastique est un caoutchouc.
